# FASCICULE DE BREVET EUROPEEN

(11) **EP 4 351 847 B1**
(45) Date de publication et mention de la délivrance du brevet: **07.05.2025**
(21) Numéro de dépôt: 22734661.6
(22) Date de dépôt: 02.06.2022
(51) Int. Cl.: B25J 21/02, G21F 7/047

(54) **DISPOSITIF DE TRANFERT POUR ENCEINTE ETANCHE COMPORTANT UNE PARTIE DEFORMABLE**
TRANSFERVORRICHTUNG FÜR EIN ABGEDICHTETES GEHÄUSE MIT EINEM VERFORMBAREN TEIL
TRANSFER DEVICE FOR A SEALED ENCLOSURE COMPRISING A DEFORMABLE PORTION

(30) Priorité: 07.06.2021 FR 2105955
(43) Date de publication de la demande: 17.04.2024
(73) Titulaire: Getinge Life Science France, 41100 Vendôme (FR)
(72) Inventeur: MOTTIER, Emmanuel, 41100 AZE (FR); BOTTIER, Samuel, 41160 DANZE (FR)
(74) Mandataire: Brevalex
(86) Numéro de dépôt international: PCT/FR2022/051042
(87) Numéro de publication internationale: WO 2022/258913

(56) Documents cités:
- EP-A1- 3 581 339
- JP-A- 2019 524 272
- US-A1- 2018 333 725

## Description

### DOMAINE TECHNIQUE ET ÉTAT DE LA TECHNIQUE ANTÉRIEURE

La présente demande se rapporte à un dispositif de transfert pour une enceinte étanche délimitant un volume clos destiné à être connecté à un autre volume clos, l'enceinte étanche comportant un dispositif de connexion étanche entre les deux volumes clos.

Dans un certain nombre de secteurs industriels, parmi lesquels on citera les secteurs pharmaceutique, médical, agroalimentaire et nucléaire, il est nécessaire ou souhaitable d'effectuer certaines tâches dans une atmosphère confinée, soit afin de protéger le personnel, par exemple de la radioactivité, de la toxicité..., soit au contraire de pouvoir effectuer ces tâches dans une atmosphère aseptique ou exempte de poussière, soit enfin les deux simultanément.

Le transfert d'appareil ou de produit d'un volume clos à l'autre, sans qu'à aucun moment l'étanchéité de chacun de ces volumes vis-à-vis de l'extérieur ne soit rompue, pose un problème délicat à remplir. Ce problème peut être résolu par un dispositif de connexion à double porte.

Un tel dispositif à double porte muni d'une commande à multiples sécurités est par exemple connu du document FR 2 695 343. Chaque volume est clos par une porte montée dans une bride. Chaque porte est solidarisée à sa bride par une liaison baïonnette et les deux brides sont destinées à être solidarisées l'une à l'autre par une liaison baïonnette. Ce système est également désigné RTP pour « Rapid transfer port » en terminologie anglo-saxonne.

Dans le cas où l'un des volumes clos est formé par un conteneur et l'autre volume par une enceinte, par exemple une boîte à gants, le transfert s'effectue de la manière suivante. La bride du conteneur comporte sur sa périphérie extérieure des oreilles destinées à coopérer avec une empreinte de la bride de la boîte à gant. La bride du conteneur est introduite dans la bride de la boîte à gant, le conteneur est orienté de sorte à faire correspondre les oreilles avec l'empreinte. Une première rotation du conteneur suivant l'axe de sa porte permet de solidariser la bride du conteneur à la bride de la boîte à gant par la liaison baïonnette. Au moyen d'une deuxième rotation du conteneur, suivant le même axe et en continuité avec la première rotation, la porte du conteneur est pivotée par rapport au conteneur, assurant à la fois une solidarisation par une autre liaison baïonnette avec la porte de la boîte à gant et une désolidarisation du nouvel ensemble formé par les deux portes accolées vis-à-vis des brides de porte et de boîte à gant. Une commande à poignée située dans la boîte à gant permet de déverrouiller un mécanisme de sécurité et de libérer le passage entre les deux volumes. Dans le cas d'une atmosphère aseptique, les faces extérieures des deux portes étant en contact l'une avec l'autre de manière étanche, elles ne peuvent contaminer l'intérieur des volumes ou être contaminées par l'environnement intérieur de la boîte à gants.

La bride de conteneur comporte un joint qui, lorsqu'elle est solidarisée avec la bride de la boîte à gant, délimite avec les deux brides le passage entre l'intérieur du conteneur et l'intérieur de la boîte à gants. La pointe du joint de la bride de conteneur qui n'est pas en contact avec la bride de la boîte à gant est appelé « anneau de contamination » ou « ring of concern ». Il faut veiller à l'intégrité du joint de la bride de conteneur et privilégier d'éviter le contact avec l'anneau de contamination lors du transfert, pour éviter la contamination de l'enceinte.

Ce type d'enceinte est utilisé pour la fabrication de produits sous atmosphère contrôlée, par exemple dans le domaine pharmaceutique pour la fabrication des médicaments et leur emballage. Des lignes de remplissage sont par exemple disposées dans les enceintes. Des objets de l'extérieur peuvent alors être transférés vers l'intérieur de l'enceinte, par exemple des flacons ou des bouchons. Les objets sont contenus dans un sac muni d'une bride et d'une porte, la bride étant connectée de manière étanche à la bride de l'enceinte. Pour faciliter le transfert des objets, par exemple pour verser ceux-ci dans un bol vibrant de la ligne de remplissage, un système de transfert est mis en œuvre dans l'enceinte, comportant un élément formant un entonnoir, appelé chute et venant se positionner en appui ou dans la bride de l'enceinte à l'intérieur de l'enceinte pour recevoir les objets qui proviennent du sac et les guider vers leur destination, par exemple le bol vibrant. Le positionnement de la chute dans l'ouverture de la bride de conteneur permet de couvrir l'anneau de contamination.

Un exemple d'un tel système de transfert est décrit dans le document EP3581339. La chute est articulée par rapport à la paroi de l'enceinte entre une position accostée, dans laquelle elle pénètre dans la bride de l'enceinte et borde l'ouverture du conteneur qui est monté sur la bride de l'enceinte à l'extérieur de celle-ci, et une position écartée ou repos, dans laquelle la chute est écartée de l'ouverture de l'enceinte de sorte à ne pas gêner la remise en place de la porte de l'enceinte.

La chute est en contact avec les objets lors de leur déversement. Il est donc nécessaire de nettoyer la chute pour répondre aux contraintes de propreté de l'enceinte de confinement. Il est alors requis de pouvoir extraire la chute de l'enceinte pour pouvoir la nettoyer et lui faire subir une opération d'autoclavage.

Pour assurer un transfert correct, la chute a une section transversale qui occupe toute la section de passage de l'ouverture de transfert à travers le dispositif de connexion monté à travers la paroi de l'enceinte pour collecter tous les objets provenant du conteneur. L'extrémité de la chute vient en appui contre la bride du conteneur. Il en résulte que la chute ne peut être extraite de l'enceinte. Pour extraire la chute de l'enceinte, soit l'enceinte est équipée d'un autre dispositif de connexion étanche avec un diamètre permettant le passage de la chute, ce qui implique un coût supplémentaire et un risque de fuite supplémentaire, soit un hayon est prévu. Mais l'ouverture du hayon implique, lors de l'évacuation de la chute, une ouverture complète de l'enceinte et une rupture de confinement.

### EXPOSÉ DE L'INVENTION

C'est par conséquent un but de la présente invention d'offrir un dispositif de transfert ou chute ne présentant pas les inconvénients énoncés ci-dessus.

Le but énoncé ci-dessus est atteint par un dispositif de transfert ou chute configuré pour être monté dans une enceinte de confinement afin d'assurer le transfert d'éléments entre un volume étanche connecté à l'enceinte par un dispositif de connexion étanche et l'enceinte, le dispositif de transfert comportant au moins une première partie destinée à pénétrer dans le dispositif de connexion, ladite première partie présentant des propriétés de déformation élastique permettant de déformer ladite partie et d'évacuer celle-ci par le dispositif de connexion de diamètre réduit ou tout autre dispositif de connexion à double porte de diamètre réduit. Le dispositif de transfert comporte également des moyens de connexion à un dispositif de déplacement du dispositif de transfert dans l'enceinte.

Grâce à l'invention, on peut assurer l'évacuation de la chute d'une enceinte n'ayant qu'un ou plusieurs dispositifs de connexion ayant une section de passage inférieure à celle de la chute. Grâce à l'invention, on peut également assurer l'évacuation de la chute sans rompre le confinement et sans couper la stérilité de l'enceinte.

Avantageusement la première partie présente une forme évasée.

De préférence, la chute comporte une deuxième partie rigide de forme par exemple tubulaire dont la section transversale permet son extraction à travers le dispositif de connexion.

De manière particulièrement avantageuse, les moyens de connexion au dispositif de déplacement de la chute sont des moyens actionnables à une main.

En d'autres termes, on réalise une chute dont au moins la partie de plus grande section est souple pour pouvoir être déformée, et dans son étant déformé, présenter une dimension extérieure lui permettant un transfert entre l'intérieur de la cellule et l'extérieur de la cellule. La partie souple reprend avantageusement sa forme initiale après son transfert de la cellule vers l'extérieur ou inversement.

L'invention est particulièrement adaptée pour équiper une enceinte munie d'un dispositif de connexion à ouverture automatisée qui ne requiert pas de trou de gant supplémentaire pour son ouverture.

L'un des objets de la présente demande est un dispositif de transfert destiné à être monté dans une enceinte munie d'au moins un dispositif de connexion étanche, ledit dispositif de transfert comportant au moins une première partie formant un conduit pour l'écoulement d'éléments dans ladite enceinte, et des moyens de connexion à un dispositif de déplacement dudit dispositif de transfert dans l'enceinte, ladite première partie présentant des propriétés de déformation élastique de sorte à pouvoir être déformée élastiquement par un opérateur et permettre après déformation le passage du dispositif de transfert par le dispositif de connexion.

De préférence, la première partie est réalisée dans un matériau choisi parmi les élastomères, par exemple le silicone thermodurcissable, l'EPDM (Ethylène-Propylène-Diène Monomère) thermodurcissable, une résine de coulée silicone ou LSR (Liquid Silicone Resin en terminologie anglo-saxonne) thermodurcissable, les élastomères thermoplastiques, le PVC (polyvinylchlorure).

Dans un exemple avantageux, la première partie a une forme évasée de plus grand diamètre destinée à être orientée vers le dispositif de connexion.

Par exemple, le dispositif de transfert comporte une deuxième partie rigide formant conduit, à laquelle sont fixés les moyens de connexion, la deuxième partie ayant par exemple une forme tubulaire.

Un autre objet de la présente demande est une enceinte comportant au moins un dispositif de connexion étanche monté dans une paroi de ladite enceinte, un système de transfert comportant un dispositif de transfert selon l'invention, un dispositif de déplacement du dispositif de transfert à l'intérieur de l'enceinte pour placer le dispositif de transfert de sorte à permettre un transfert de composants à travers le dispositif de connexion étanche, et des moyens de montage/démontage du dispositif de transfert sur le dispositif de déplacement.

La première partie du dispositif de transfert peut être orientée de sorte à pénétrer dans une bride du dispositif de connexion étanche et en partie dans une bride 9 du conteneur.

De préférence, la première partie du dispositif de transfert comporte une section transversale maximale à l'état non déformé ne permettant pas son passage à travers le premier dispositif de connexion étanche.

Avantageusement, les moyens de montage/démontage du dispositif de transfert sont configurés pour être actionnable à une main.

Selon une caractéristique additionnelle, le dispositif de déplacement comporte au moins un bras articulé en rotation par rapport au dispositif de connexion étanche de sorte à permettre au dispositif de transfert de se rapprocher ou de s'éloigner du dispositif de connexion étanche.

Dans un exemple de réalisation, la deuxième partie du dispositif de transfert a une section transversale permettant son passage à travers le dispositif de connexion étanche sans déformation.

Dans un autre exemple de réalisation, l'enceinte comporte un rond de gant permettant le montage/démontage du dispositif de transfert par l'intermédiaire d'un gant monté dans le rond de gant et son passage à travers le dispositif de connexion étanche.

Selon une caractéristique additionnelle, le dispositif de déplacement comporte un moyen motorisé.

Selon une autre caractéristique additionnelle, l'enceinte comporte des moyens motorisés de verrouillage d'une porte du dispositif de connexion étanche et des moyens motorisés d'ouverture de la porte du dispositif de connexion étanche.

Un autre objet de la présente demande est un procédé d'extraction du dispositif de transfert de l'enceinte selon la présente invention comportant :
a) Connexion d'un conteneur sur le dispositif de connexion,
b) Ouverture du passage entre l'intérieur de l'enceinte et l'intérieur du conteneur,
c) Déconnexion du dispositif de transfert du dispositif de déplacement,
d) Déformation de la première partie du dispositif de transfert réduisant ses dimensions extérieures permettant son extraction par le passage entre l'intérieur de l'enceinte et l'intérieur du conteneur,
e) Extraction du dispositif de transfert à travers le passage entre l'intérieur de l'enceinte et l'intérieur du conteneur,
f) Fermeture du passage entre l'intérieur de l'enceinte et l'intérieur du conteneur,
g) Déconnexion du conteneur.

Un autre objet de la présente demande est un procédé de mise en place d'un dispositif de transfert de l'enceinte selon l'invention, comportant :
a') Fourniture d'un conteneur contenant un dispositif de transfert selon l'invention,
b') Connexion dudit conteneur sur le dispositif de connexion,
c') Ouverture du passage entre l'intérieur de l'enceinte et l'intérieur du conteneur,
d') Déformation de la première partie du dispositif de transfert réduisant ses dimensions extérieures permettant son insertion par le passage entre l'intérieur du conteneur et l'intérieur de l'enceinte,
e') Insertion du dispositif de transfert dans l'enceinte à travers le passage entre l'intérieur de l'enceinte et l'intérieur du conteneur,
f') Connexion du dispositif de transfert au dispositif de déplacement,
g') Fermeture du passage entre l'intérieur de l'enceinte et l'intérieur du conteneur,
h') Déconnexion du conteneur.

Dans un exemple de réalisation, le conteneur est un système à gant et dans lequel les étapes c), d) et e) ou les étapes d'), e') et f') sont effectuées à travers le gant du système à gant.

Selon un autre exemple de réalisation, le conteneur est un conteneur rigide ou souple et dans lequel les étapes c), d) et e) ou les étapes d'), e') et f') sont effectuées à travers un gant monté dans un rond de gant situé à proximité du dispositif de connexion.

### BRÈVE DESCRIPTION DES DESSINS

La présente invention sera mieux comprise sur la base de la description qui va suivre et des dessins en annexe sur lesquels:
Figure 1 est une vue en coupe longitudinale d'une enceinte munie d'un dispositif de transfert selon un exemple de réalisation, le dispositif de transfert étant dans une position accostée,
Figure 2 est une vue en coupe longitudinale d'une enceinte munie d'un dispositif de transfert selon un exemple de réalisation, le dispositif de transfert étant dans une position de parking,
Figure 3 est une vue en perspective du dispositif de transfert des figures 1 et 2 selon un point de vue.
Figure 4 est une vue en perspective du dispositif de transfert des figures 1 et 2 selon un autre point de vue.
Figure 5 est une vue en perspective d'un système à gant utilisable pour extraire le dispositif de transfert de l'enceinte.
Figure 6 est une représentation schématique d'une enceinte munie d'un dispositif de connexion étanche et d'un conteneur de transfert.
Figure 7A est une vue en perspective d'un exemple de système montage/démontage rapide à une seule main pouvant être mis en œuvre entre la chute et le dispositif d'articulation.
Figure 7B est une vue en coupe longitudinale du système de la figure 7A.
Figure 7C est une vue en coupe du système de la figure 7B le long du plan A-A.
Figure 8 est une vue en coupe d'un exemple de réalisation de l'assemblage entre les deux parties d'un dispositif de transfert.

### EXPOSÉ DÉTAILLÉ DE MODES DE RÉALISATION PARTICULIERS

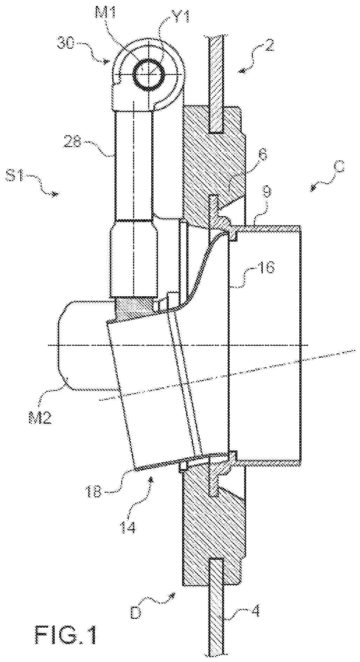

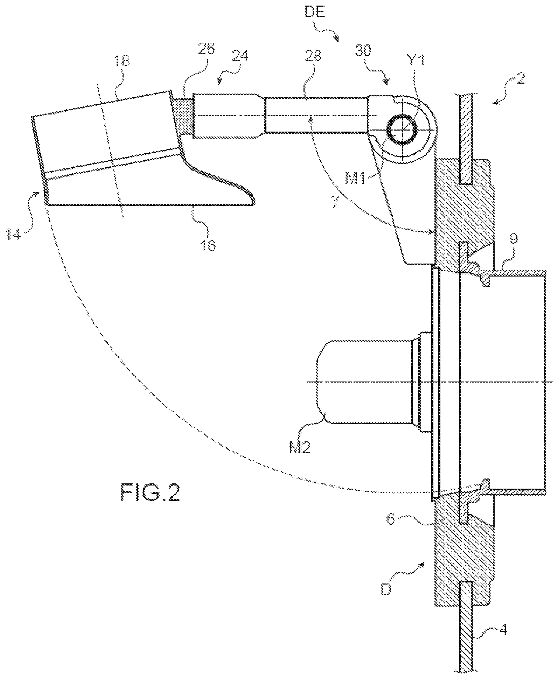

Sur les figures 1 et 2, on peut voir un exemple d'enceinte étanche, représentée en transparence, munie d'un exemple d'un système de transfert S1, le système de transfert étant représenté dans différentes positions. Le système de transfert S1 permet de guider des objets venant de l'extérieur vers une zone du volume intérieur de l'enceinte. Par exemple ces objets sont des bouchons contenus dans un sac et qui sont déversés à l'intérieur de l'enceinte. Le système S1 est destiné à faciliter le traitement et/ou le transfert d'objets/d'éléments dans l'enceinte, par exemple à faciliter la fourniture d'objets/d'éléments à un tapis d'acheminement.

L'enceinte 2 comporte des parois délimitant un volume étanche. Au moins l'une des parois 4 comporte un dispositif de connexion étanche D à un système étanche extérieur, par exemple une autre enceinte, un conteneur rigide ou souple, type sac. Le dispositif D est destiné à permettre de connecter de manière étanche les volumes intérieurs de l'enceinte et du système extérieur et permettre un transfert étanche entre les deux volumes, pour protéger les objets contenus dans les volumes étanches et/ou protéger l'environnement extérieur de ces objets. Par exemple, l'enceinte 2 peut faire partie d'un système d'isolateur, en particulier une zone de confinement de l'isolateur, une zone de confinement stérile ou une zone de confinement radioactive, qui peut être utilisée pour fabriquer des produits dans l'industrie pharmaceutique, agroalimentaire ou nucléaire par exemple. Le dispositif de connexion D est monté à travers une paroi 4 de l'enceinte 2.

Des exemples de dispositif de connexion étanche sont décrits dans le document FR 2 695 343 et dans le document US 9 754 691.

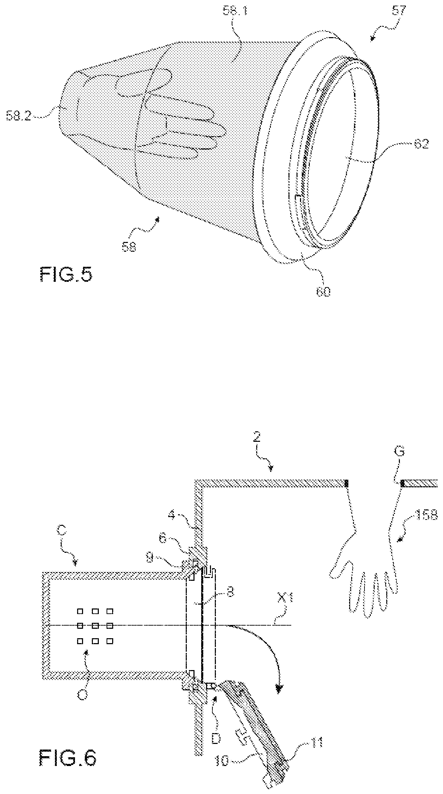

Sur la figure 6, on peut voir une représentation schématique du dispositif de connexion et d'un conteneur dans un état connecté.

Le dispositif de connexion étanche D comporte une bride 6, dite bride alpha, montée dans la paroi 4 et délimitant une ouverture 8, une porte 10, dite porte alpha, destinée à fermer de manière étanche l'ouverture 8. Le dispositif de connexion étanche D comporte également des moyens de connexion à un système extérieur, par exemple un conteneur C, comportant également une bride 9, dite bride bêta, bordant une ouverture et une porte 11, dite porte bêta, fermant de manière étanche ladite ouverture. Les moyens de connexion de la bride 6 et de la bride 9 sont par exemple de type à baïonnette. Chaque porte est connectée à sa bride également par une connexion à baïonnette ou la porte alpha est connectée à la bride alpha par une charnière et un verrou. Le dispositif de connexion présente une symétrie de révolution d'axe X1.

Un exemple de mode opératoire pour connecter de manière étanche un conteneur à l'enceinte va être brièvement décrit à l'aide de la figure 6. Sur la gauche de la figure 6, on peut voir représenté le conteneur fermé avant sa connexion à l'enceinte. Le conteneur contient des objets O représentés schématiquement, que l'on souhaite transférer dans l'enceinte. Le système de transfert n'est pas représenté.

La bride bêta 9 du conteneur est solidarisée de manière étanche à la bride alpha 6 de l'enceinte au moyen d'une connexion à baïonnette. Simultanément la porte bêta 11 du conteneur et la porte alpha 10 de l'enceinte sont solidarisées l'une à l'autre de manière étanche par une connexion à baïonnette. Les faces extérieures des portes alpha 10 et bêta 11 sont isolées par rapport aux volumes intérieurs du conteneur et de l'enceinte, l'ensemble formé par les deux portes 10, 11 solidarisées l'une à l'autre peut être retiré en le faisant pivoter autour de son axe, et ensuite déplacer dans l'enceinte, libérant un passage entre les deux volumes. Les deux volumes sont alors en communication de manière étanche et le transfert d'objets entre les deux volumes peut être réalisé par le passage.

La bride 9 du conteneur porte un joint qui vient en contact avec la face extérieure de la bride 6 de l'enceinte, ce joint participe à la délimitation du passage entre les deux volumes.

Le système de transfert S1 comporte un dispositif de transfert 14 assurant le guidage de l'écoulement des objets, désigné chute et un dispositif de déplacement DE de la chute 14 dans l'enceinte et particulièrement par rapport au dispositif de connexion étanche D.

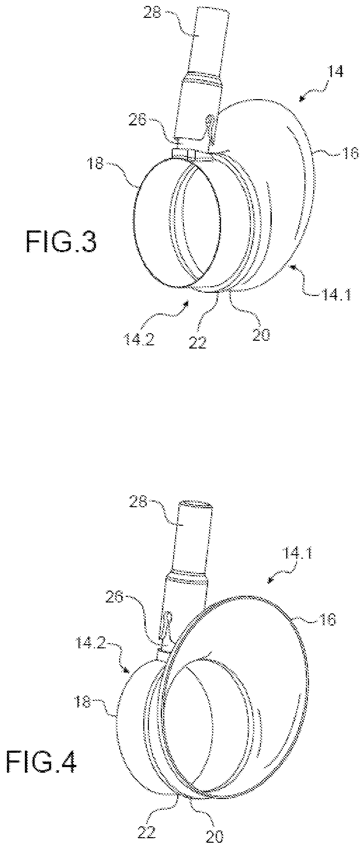

Dans l'exemple représenté sur les figures 3 et 4, la chute 14 comporte une première partie 14.1 formant un conduit, dont une extrémité libre 16 est destinée à pénétrer dans la bride 6 du dispositif de connexion D et en partie dans la bride 9 du conteneur, et à border le passage à travers le dispositif de connexion, et une deuxième partie 14.2, formant conduit, dont une extrémité libre 18 est destinée au déversement des éléments dans l'enceinte.

La chute forme un conduit qui transfère les éléments du conteneur connecté à l'enceinte à l'intérieur de l'enceinte.

La première partie 14.1 de la chute 14 présente une forme évasée de sorte que la section transversale de son extrémité libre 16 remplisse la section du passage du dispositif de connexion et que la première partie raccorde la section du passage du dispositif de connexion et la deuxième partie 14.2. Dans l'exemple représenté, l'extrémité libre 16 de la première partie 14.1 est en appui contre la bride bêta du conteneur.

Dans l'exemple représenté, la première partie 14.1 de la chute 14 comporte une deuxième extrémité 20 connectée à une deuxième extrémité 22 de la deuxième partie 14.2.

La deuxième partie 14.2 est décentrée vers le bas par rapport au passage du dispositif de connexion pour être dans le flux de déversement des composants. La première partie 14.1 a alors une forme comblant l'espace entre la deuxième extrémité 22 de la deuxième partie 14.2 et l'entrée du passage du dispositif de connexion. Par ailleurs, la première partie 14.1 comporte une partie basse présentant une forme assurant l'absence d'obstacle pour les objets se déversant à partir du conteneur et assurant l'absence de pente s'opposant à l'écoulement des objets du conteneur vers l'enceinte.

Dans l'exemple représenté, la première partie 14.1 ne présente pas une symétrie de révolution et présente une forme de « casquette ».

En outre dans l'exemple représenté, les vues en coupe montrent que la première partie 14.1 a une section incurvée (figures 1 et 2).

Toute autre forme de la première partie assurant l'absence de marche en partie basse formant obstacle au déversement des composants peut être mise en œuvre.

Selon l'invention, la première partie est réalisée en un matériau présentant des propriétés de déformation élastique de sorte qu'elle peut être déformée suffisamment pour passer à travers le passage du dispositif de connexion. Par exemple le matériau de la première partie 14.1 est un matériau synthétique, choisi parmi les élastomères, par exemple en silicone thermodurcissable, en EPDM (Ethylène-Propylène-Diène Monomère) thermodurcissable, en résine de coulée silicone ou LSR (Liquid Silicone Resin en terminologie anglo-saxonne) thermodurcissable, en élastomère thermoplastique, en PVC (polyvinylchlorure).

L'épaisseur de la première partie 14.1 en matériau souple est par exemple comprise entre 1 mm et 5 mm.

Les propriétés de déformation élastique du matériau de la première partie 14.1 sont considérées par rapport à une gamme d'efforts pouvant être exercées par un opérateur avec sa main, par exemple entre 5 N et 100 N.

Néanmoins les propriétés mécaniques du matériau et l'épaisseur de la première partie assurent à celle-ci un maintien de sa forme lorsqu'aucun effort n'est exercé sur celle-ci.

La deuxième partie 14.2 est rigide dans l'exemple représenté. Elle peut avantageusement être réalisée en acier inoxydable. Dans la présente demande on entend par « une partie rigide », une partie non déformable ou peu déformable en appliquant un effort d'intensité habituel lors de la manipulation en fonctionnement normal du système de transfert.

Dans l'exemple représenté, la deuxième partie 14.2 a une forme tubulaire, en variante il a une forme tronconique et/ou incurvée de sorte à former un coude.

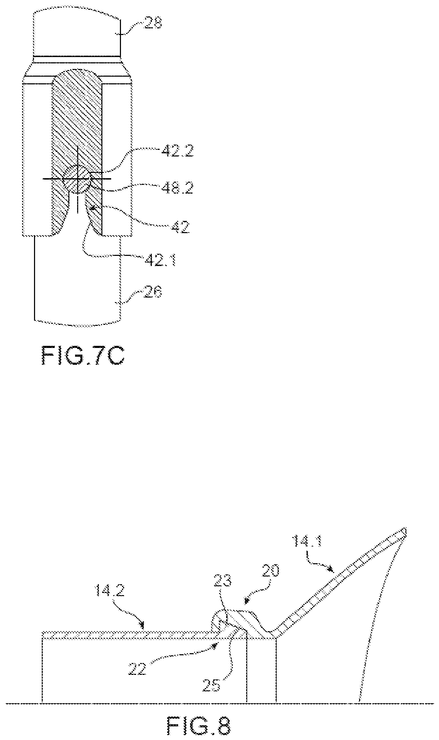

De préférence, la première partie 14.1 est clippée sur la deuxième partie 14.2. Sur la figure 8, on peut voir une vue en coupe d'un exemple de chute dans laquelle la première partie est clippée sur la deuxième partie. Dans cet exemple, la deuxième partie 14.2 forme la partie mâle, celle-ci est munie d'un ergot 23 de section triangulaire sur toute sa circonférence près de son extrémité 22. La partie 14.1 forme la partie femelle, son extrémité 20 comporte une gorge radiale 25 configurée pour loger l'ergot avec serrage et assurer une liaison par clippage des première et deuxième parties. Lors du montage de la première partie 14.1 sur la deuxième partie 14.2, l'extrémité20 de la première partie 14.1 est déformée radialement vers l'extérieur pour loger l'ergot annulaire assurant un serrage de la première partie 14.1 sur la deuxième partie 14.2.

De préférence, l'angle formé entre la face latérale de la deuxième partie 14.2 et la base de l'ergot est inférieur à 90° améliorant l'accroche de la première partie sur la deuxième partie.

Le mise en œuvre de liaison par clippage offre l'avantage d'un démontage aisé de la partie souple et de son remplacement aisé, et offre une bonne nettoyabilité. Selon d'autres variantes la première partie 14.1 et la deuxième partie 14.2 peuvent être assemblées par vissage ou emmanchement. Ces types d'assemblage présentent l'avantage de convenir à l'autoclavage. Selon une autre variante, la première partie 14.1 et la deuxième partie 14.2 sont assemblées par collage, néanmoins la tenue à l'autoclavage est généralement moins bonne.

En variante, la chute comporte un corps entièrement en un matériau déformable élastiquement et une bague en matériau rigide de section transversale inférieure à la section de passage du dispositif de connexion, et permettant la connexion de la chute au dispositif de déplacement.

En variante encore, la première partie comporte un ou des renforts, par exemple métalliques qui assurent le maintien de la première partie dans une forme donnée tout en permettant sa déformation et sa réduction de volume pour son transfert à travers le dispositif de connexion.

Dans l'exemple représenté, le dispositif de déplacement comporte un bras 28 articulé en rotation au moyen d'une articulation pivot 30 d'axe Y1 sur la paroi de l'enceinte portant le dispositif de déplacement. De manière avantageuse, l'articulation pivot 30 est fixée sur la bride 6, ce qui évite de devoir percer la paroi de l'enceinte pour fixer le système de transfert.

Le bras 28 peut pivoter entre une position parking par exemple celle représentée sur la figure 2 et une position accostée, dans laquelle la chute accoste le dispositif de connexion, comme cela est représenté sur la figure 1. La position parking correspond à une position non fonctionnelle du dispositif de transfert. Dans l'exemple représenté, un angle γ = 90° sépare la position parking et la position accostée du bras 28. L'angle y peut prendre une autre valeur qui place la chute dans une position parking avantageuse favorisant, par exemple, l'ouverture/fermeture de la porte du dispositif de connexion ou le flux laminaire ou les déplacements à l'intérieur de l'enceinte.

En variante, le dispositif de déplacement comporte plusieurs bras articulés les uns par rapport aux autres de sorte à appliquer à la chute 14 des déplacements plus complexes dans l'enceinte. En outre, le dispositif de déplacement peut être fixé à une paroi autre que celle portant le dispositif de connexion.

En outre le dispositif de déplacement est avantageusement motorisé. L'articulation pivot 30 comporte un moteur électrique M1. Le moteur électrique est fixé sur la bride alpha 6. L'alimentation électrique du moteur M1 se fait à travers la bride alpha 6.

Avantageusement, le dispositif de déplacement est équipé de plusieurs bras et plusieurs moteurs, permettant des trajectoires plus complexes, par exemple pour amener la partie détachable de la chute directement dans le conteneur connecté au dispositif de transfert D.

En outre, lorsqu'au moins une partie du dispositif de connexion est automatisée, par exemple la commande du verrou de la porte alpha du dispositif de connexion et l'ouverture de la porte alpha, par mise en œuvre d'un ou plusieurs moteurs électriques, les câbles électriques d'alimentation et de commande du moteur électrique M1 du dispositif de transfert et des moteurs du dispositif de connexion sont rassemblés et cheminent par un seul perçage réalisé à travers la bride alpha. Sur les figures 1 et 2, on peut voir un moteur M2 actionnant le verrou de la porte alpha.

Cet assemblage permet d'offrir un haut niveau d'intégration et une simplification d'équipement d'une enceinte. En outre les risques de fuite sont réduits.

La chute comporte également des moyens de connexion 24 au dispositif de déplacement DE de la chute. Dans cet exemple, les moyens de connexion 24 comportent une tige 26 fixée de préférence à la deuxième partie 14.2 de la chute et munie à une deuxième extrémité de moyens pour connecter/déconnecter rapidement et aisément la chute au dispositif de déplacement DE. La fixation de la tige 26 sur la partie rigide de la chute permet de rendre plus précis son déplacement et limite sa déformation sous son poids.

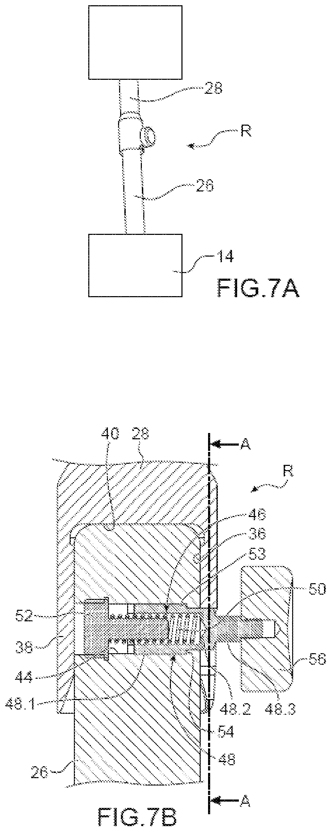

Sur les figures 7A à 7C, on peut voir un exemple de dispositif de connexion de la chute au dispositif de déplacement.

La chute est avantageusement montée de manière amovible sur le dispositif d'articulation, ce qui permet de manière aisée son retrait, son nettoyage, et sa stérilisation par exemple en autoclave. Un nettoyage facilité est particulièrement intéressant puisque la chute lors des transferts est en contact avec les composants, et requiert un nettoyage soigneux.

De préférence, la fixation de la chute 14 sur le dispositif de déplacement DE s'opère par un système de montage/démontage rapide R à une seule main.

Sur les figures 7A à 7C, on peut voir un exemple d'un système de montage/démontage rapide R.

Le système R est disposé entre le bras 28 du dispositif de déplacement DE et la tige 26 fixée sur la chute 14. Par exemple le bras 28 comporte à son extrémité libre un logement 36 dimensionné pour loger l'extrémité libre de la tige 26. Le logement 36 comporte une paroi latérale 38 et un fond 40. La paroi latérale 38 comporte une encoche 42 (figure 7C) s'étendant longitudinalement sur l'épaisseur du logement 36. L'encoche 42 comporte une partie d'insertion 42.1 évasée débouchant dans l'extrémité libre du bras 28 et une parie d'immobilisation 42.2 de forme circulaire.

La tige 26 fixée à la chute comporte un alésage transversal 44 traversant et logeant un mécanisme de verrouillage axial 46 coopérant avec l'encoche 42.

Le mécanisme de verrouillage 46 comporte une tige de verrouillage 48 mobile transversalement dans l'alésage 44 et poussée vers l'extérieur au moyen d'un ressort 50 monté en compression entre la tige 48 et une butée transversale 52. Dans cet exemple, la butée est formée par un boulon vissé dans l'alésage.

La tige de verrouillage 48 comporte une trois portions axiales 48.1, 48.2 et 48.3 de diamètre décroissant dans le sens de la force de poussée exercée par le ressort.

L'alésage transversal 44 comporte un épaulement 53 coopérant avec un épaulement 54 raccordant les faces latérales extérieures des portions axiales 48.1 et 48.2. Le diamètre de la portion axiale 48.2 est sensiblement égal à celui de la partie d'immobilisation 42.2.

L'extrémité de la tige de verrouillage 48 porte un bouton d'actionnement 56.

Le fonctionnement du système est le suivant :
L'opérateur appuie sur le bouton d'actionnement 56, déplaçant la tige de verrouillage 48 et comprimant le ressort 50, la portion 48.3 vient alors se loger dans la partie d'immobilisation 42.2 de l'encoche. Son diamètre étant inférieur à la plus petite dimension transversale de l'encoche 42, la portion 48.3 peut coulisser dans l'encoche 42, ce qui permet de retirer l'extrémité de la tige 26 du logement 36, et de séparer la chute du dispositif d'articulation.

La remise en place de la chute sur le dispositif d'articulation s'effectue en appuyant sur le bouton d'actionnement et en insérant la portion 48.3 dans l'encoche 42.

Cette manipulation peut se faire d'une seule main.

Le retrait de la chute en vue de son nettoyage va maintenant être décrit.

Initialement le dispositif de connexion est fermé, rien n'est accosté sur le dispositif de connexion.

La chute est placée dans une position non accostée, par exemple dans la position de parking telle que représentée sur la figure 2, ou par exemple dans une position intermédiaire facilitant l'accès à son système de montage/démontage rapide R.

Un système de gant représenté sur la figure 5 est monté sur la bride du dispositif de connexion. Ce système de gant comporte une partie bêta 57 et un gant 58 dont la manchette 58.1 est fixée de manière étanche sur la bride bêta et la partie 58.2 recevant la main est rentrée à l'intérieur de la manchette 58.1.

La partie bêta 57 comporte une bride bêta 60 et une porte bêta 62. La bride bêta 60 est fixée à la bride alpha 6 du dispositif de connexion D, la porte bêta 62 est fixée à la porte alpha 10. Le verrou du dispositif de connexion est commandé pour libérer la porte alpha et l'ouverture de la porte alpha à laquelle est connectée la porte bêta est commandée.

Le passage à travers le dispositif de connexion est alors libre.

L'opérateur met sa main dans le gant et fait pénétrer sa main dans l'enceinte. Il accède au système de montage/démontage rapide R de la chute. L'opérateur appuie sur le bouton d'actionnement 56, ce qui déverrouille la tige 26 du bras 28. La chute est alors libérée du dispositif de déplacement DE. Cette opération se fait d'une seule main.

L'opérateur déforme ensuite la partie souple en pressant celle-ci entre ses doigts pour la faire passer à travers le dispositif de connexion. La partie rigide qui présente un diamètre inférieur à celui du passage du dispositif de connexion passe simplement. La chute se retrouve alors à l'extérieur de l'enceinte à l'intérieur de la manchette du gant.

La fermeture des portes et le verrouillage de la porte alpha sont commandés. Le système de gant peut être détaché de la partie alpha. La chute est isolée dans le système de gant et peut être amenée dans une installation de nettoyage et éventuellement d'autoclavage.

Lorsque la chute a été nettoyée et éventuellement a subi un autoclavage, celle-ci est réintroduite dans l'enceinte. Pour cela elle est disposée à l'intérieur du système de gant, puis elle est introduite dans l'enceinte en déformant la partie souple pour traverser le dispositif de connexion. La partie souple reprend sa forme initiale dès qu'elle est à l'intérieur de l'enceinte. La chute est ensuite connectée au bras 28 via le système de montage/démontage rapide R. Le dispositif de connexion est refermé. Le système de gant est séparé du dispositif de connexion.

La mise en place d'une chute neuve se fait de la même manière.

Le système de transfert est de nouveau prêt à être utilisé.

La chute selon la présente invention est utilisable dans les enceintes munies de tout type de dispositif de connexion. Elle est particulièrement avantageuse dans le cas d'un dispositif de connexion automatisé qui ne requiert pas d'accès supplémentaire de l'opérateur à l'intérieur de l'enceinte pour actionner le dispositif de connexion. La chute est donc particulièrement adaptée à des enceintes comportant un nombre réduit d'accès.

En outre, la mise en œuvre d'une partie déformable élastiquement qui est destinée à venir en contact avec le dispositif de connexion présente l'avantage de réduire les risques d'endommagement du dispositif de connexion lorsque la chute entre en contact avec le dispositif de connexion. Par ailleurs, cette partie déformable élastiquement permet d'appliquer fortement la chute contre le dispositif de connexion pour supprimer tout passage entre la chute et le dispositif de connexion et éviter la chute d'objets, notamment de petite taille. La chute selon la présente invention permet le transfert d'objets de petite taille de manière sûre. En effet la partie déformable élastiquement permet de compenser des défauts d'accostage avec le dispositif de connexion.

La chute selon l'invention peut également être utilisé avec un dispositif de connexion à ouverture manuelle, le déplacement de la chute s'effectue dans ce cas généralement manuellement. Le retrait de la chute s'opère alors de la manière suivante.

Un accès, désigné rond de gant G schématisé sur la figure 6, est prévu à travers une paroi de l'enceinte à proximité du dispositif de connexion. L'opérateur connecte un conteneur ou sac muni d'une partie bêta au dispositif de connexion et un gant 158 est connecté au rond de gant G. L'opérateur insère sa main dans le gant, ouvre la double porte, décroche la chute, place la chute dans le conteneur ou le sac et referme la double porte. Il retire sa main du gant et déconnecte le conteneur ou le sac contenant la chute, qui est transféré par exemple vers une installation de nettoyage.

En variante, le dispositif de connexion est automatisé et l'enceinte comporte un rond de gant à proximité du dispositif de connexion. L'opérateur connecte un conteneur ou un sac au dispositif de connexion et monte un gant dans le rond de gant. Il commande ensuite l'ouverture de la double porte, passe sa main dans le gant, décroche la chute, place la chute dans le conteneur ou le sac, enlève sa main du gant, commande la fermeture de la double porte et retire le conteneur ou le sac chargé de la chute. Dans cette configuration, des sécurités interdisant l'accès au gant pendant les phases d'ouverture/fermeture de la double porte sont avantageusement prévues.

En variante encore, la chute est introduite dans l'enceinte et extraite de l'enceinte par autre dispositif de connexion à double porte que celui par lequel le transfert a lieu, par exemple un dispositif de connexion à double porte situé à proximité.

## Revendications

1. Dispositif de transfert destiné à être monté dans une enceinte munie d'au moins un dispositif de connexion étanche, ledit dispositif de transfert comportant au moins une première partie (14.1) formant un conduit pour l'écoulement d'éléments dans ladite enceinte, et des moyens de connexion à un dispositif de déplacement (DE) dudit dispositif de transfert dans l'enceinte; **caractérisé en ce que** ladite première partie (14.1) présente des propriétés de déformation élastique de sorte à pouvoir être déformée élastiquement par un opérateur et permettre après déformation le passage du dispositif de transfert par le dispositif de connexion.

2. Dispositif de transfert selon la revendication 1, dans lequel la première partie (14.1) est réalisée dans un matériau choisi parmi les élastomères, par exemple le silicone thermodurcissable, l'EPDM (Ethylène-Propylène-Diène Monomère) thermodurcissable, une résine de coulée silicone ou LSR (Liquid Silicone Resin en terminologie anglo-saxonne) thermodurcissable, les élastomères thermoplastiques, le PVC (polyvinylchlorure)

3. Dispositif de transfert selon la revendication 1 ou 2, dans lequel la première partie (14.1) a une forme évasée de plus grand diamètre destinée à être orientée vers le dispositif de connexion.

4. Dispositif de transfert selon la revendication 1, 2 ou 3, dans lequel le dispositif de transfert comporte une deuxième partie (14.2) rigide formant conduit, à laquelle sont fixés les moyens de connexion, la deuxième partie (14.2) ayant par exemple une forme tubulaire.

5. Enceinte comportant au moins un dispositif de connexion étanche (D) monté dans une paroi de ladite enceinte, un système de transfert (S1) comportant un dispositif de transfert (14) selon l'une des revendications précédentes, un dispositif de déplacement (DE) du dispositif de transfert (14) à l'intérieur de l'enceinte pour placer le dispositif de transfert de sorte à permettre un transfert de composants à travers le dispositif de connexion étanche, et des moyens de montage/démontage du dispositif de transfert sur le dispositif de déplacement.

6. Enceinte selon la revendication 5, dans laquelle la première partie (14.1) du dispositif de transfert (14) est orientée de sorte à pénétrer dans une bride (6) du dispositif de connexion étanche (D) et en partie dans une bride 9 du conteneur.

7. Enceinte selon la revendication 5 ou 6, dans laquelle la première partie (14.1) du dispositif de transfert (14) comporte une section transversale maximale à l'état non déformé ne permettant pas son passage à travers le premier dispositif de connexion étanche (D).

8. Enceinte selon la revendication 5, 6 ou 7, dans laquelle les moyens de montage/démontage du dispositif de transfert (14) sont configurés pour être actionnable à une main.

9. Enceinte selon l'une des revendications 5 à 8, dans laquelle le dispositif de déplacement (DE) comporte au moins un bras (28) articulé en rotation par rapport au dispositif de connexion étanche de sorte à permettre au dispositif de transfert (14) de se rapprocher ou de s'éloigner du dispositif de connexion étanche (D).

10. Enceinte selon l'une des revendications 5 à 9, dans laquelle la deuxième partie (14.2) du dispositif de transfert a une section transversale permettant son passage à travers le dispositif de connexion étanche sans déformation.

11. Enceinte selon l'une des revendications 5 à 10, comportant un rond de gant permettant le montage/démontage du dispositif de transfert (14) par l'intermédiaire d'un gant monté dans le rond de gant et son passage à travers le dispositif de connexion étanche.

12. Enceinte selon l'une des revendications 5 à 11, dans laquelle le dispositif de déplacement (DE) comporte un moyen motorisé.

13. Enceinte selon l'une des revendications 5 à 12, comportant des moyens motorisés de verrouillage d'une porte du dispositif de connexion étanche et des moyens motorisés d'ouverture de la porte du dispositif de connexion étanche.

14. Procédé d'extraction du dispositif de transfert de l'enceinte selon l'une des revendications 5 à 13 comportant :
a) Connexion d'un conteneur sur le dispositif de connexion,
b) Ouverture du passage entre l'intérieur de l'enceinte et l'intérieur du conteneur,
c) Déconnexion du dispositif de transfert du dispositif de déplacement,
d) Déformation de la première partie du dispositif de transfert réduisant ses dimensions extérieures permettant son extraction par le passage entre l'intérieur de l'enceinte et l'intérieur du conteneur,
e) Extraction du dispositif de transfert à travers le passage entre l'intérieur de l'enceinte et l'intérieur du conteneur,
f) Fermeture du passage entre l'intérieur de l'enceinte et l'intérieur du conteneur,
g) Déconnexion du conteneur.

15. Procédé de mise en place d'un dispositif de transfert de l'enceinte selon l'une des revendications 5 à 13, comportant :
a') Fourniture d'un conteneur contenant un dispositif de transfert selon l'une des revendications 1 à 4,
b') Connexion dudit conteneur sur le dispositif de connexion,
c') Ouverture du passage entre l'intérieur de l'enceinte et l'intérieur du conteneur,
d') Déformation de la première partie du dispositif de transfert réduisant ses dimensions extérieures permettant son insertion par le passage entre l'intérieur du conteneur et l'intérieur de l'enceinte,
e') Insertion du dispositif de transfert dans l'enceinte à travers le passage entre l'intérieur de l'enceinte et l'intérieur du conteneur,
f') Connexion du dispositif de transfert au dispositif de déplacement,
g') Fermeture du passage entre l'intérieur de l'enceinte et l'intérieur du conteneur,
h') Déconnexion du conteneur.

16. Procédé d'extraction ou de mise en place selon la revendication 14 ou 15, dans lequel le conteneur est un système à gant et dans lequel les étapes c), d) et e) ou les étapes d'), e') et f') sont effectuées à travers le gant du système à gant.

17. Procédé d'extraction ou de mise en place selon la revendication 14 ou 15, dans lequel le conteneur est un conteneur rigide ou souple et dans lequel les étapes c), d) et e) ou les étapes d'), e') et f') sont effectuées à travers un gant monté dans un rond de gant situé à proximité du dispositif de connexion.

## Patentansprüche

1. Transfervorrichtung zur Montage in einem Gehäuse mit mindestens einer wasserdichten Verbindungsvorrichtung, wobei die Transfervorrichtung mindestens einen ersten Teil (14.1) umfasst, der einen Kanal für den Ablauf von Elementen in das Gehäuse bildet, und Verbindungsmittel zu einer Verschiebevorrichtung (DE) der Transfervorrichtung in das Gehäuse; **dadurch gekennzeichnet, dass** der erste Teil (14.1) elastische Verformungseigenschaften aufweist, so dass er von einem Bediener elastisch verformt werden kann und nach der Verformung das Passieren der Transfervorrichtung durch die Verbindungsvorrichtung ermöglicht.

2. Transfervorrichtung nach Anspruch 1, wobei der erste Teil (14.1) aus einem Material gefertigt ist, das aus Elastomeren ausgewählt ist, zum Beispiel aus duroplastischem Silikon, duroplastischem EPDM (Ethylen-Propylen-Dien-Monomer), duroplastischem Silikongussharz oder LSR (Liquid Silicone Resin in angelsächsischer Terminologie), thermoplastischen Elastomeren, PVC (Polyvinylchlorid)

3. Transfervorrichtung nach Anspruch 1 oder 2, wobei der erste Teil (14.1) eine ausgestellte Form mit größerem Durchmesser aufweist, die zur Verbindungsvorrichtung hin ausgerichtet ist.

4. Transfervorrichtung nach Anspruch 1, 2 oder 3, wobei die Transfervorrichtung einen zweiten starren, leitungsbildenden Teil (14.2) umfasst, an dem die Verbindungsmittel befestigt sind, wobei der zweite Teil (14.2) beispielsweise eine röhrenförmige Form aufweist.

5. Gehäuse umfassend mindestens einer in einer Wand des Gehäuses montierten wasserdichten Verbindungsvorrichtung (D), einem Transfersystem (S1) umfassend eine Transfervorrichtung (14) nach einem der vorhergehenden Ansprüche, einer Verschiebevorrichtung (DE) der Transfervorrichtung (14) im Inneren des Gehäuses, um die Transfervorrichtung so zu platzieren, dass ein Transfer von Komponenten durch die wasserdichte Verbindungsvorrichtung ermöglicht wird, und die Montage-/Demontagemittel der Transfervorrichtung an der Verschiebevorrichtung.

6. Gehäuse nach Anspruch 5, wobei der erste Teil (14.1) der Transfervorrichtung (14) so ausgerichtet ist, dass er in einen Flansch (6) der dichten Verbindungsvorrichtung (D) und teilweise in einen Flansch 9 des Containers eindringt.

7. Gehäuse nach Anspruch 5 oder 6, wobei der erste Teil (14.1) der Transfervorrichtung (14) einen maximalen Querschnitt im unverformten Zustand umfasst, der sein Passieren durch die erste dichte Verbindungsvorrichtung (D) nicht zulässt.

8. Gehäuse nach Anspruch 5, 6 oder 7, wobei die Montage-/Demontagemittel der Transfervorrichtung (14) so eingerichtet sind, dass sie mit einer Hand betätigt werden können.

9. Gehäuse nach einem der Ansprüche 5 bis 8, wobei die Verschiebevorrichtung (DE) mindestens einen Arm (28) umfasst, der sich in Bezug auf die dichte Verbindungsvorrichtung so dreht, dass die Transfervorrichtung (14) sich der dichten Verbindungsvorrichtung (D) nähern oder von ihr wegbewegen kann.

10. Gehäuse nach einem der Ansprüche 5 bis 9, wobei der zweite Teil (14.2) der Transfervorrichtung einen Querschnitt aufweist, der sein Durchführen durch die dichte Verbindungsvorrichtung ohne Verformung ermöglicht.

11. Gehäuse nach einem der Ansprüche 5 bis 10, umfassend einen Handschuhring, der die Montage/Demontage der Transfervorrichtung (14) über einen Handschuh ermöglicht, der in den Handschuhring montiert ist, und dessen Durchführung durch die wasserdichte Verbindungsvorrichtung.

12. Gehäuse nach einem der Ansprüche 5 bis 11, wobei die Verschiebevorrichtung (DE) ein motorisiertes Mittel umfasst.

13. Gehäuse nach einem der Ansprüche 5 bis 12, umfassend motorisierte Verriegelungsmittel einer Tür der wasserdichten Verbindungsvorrichtung und motorisierte Öffnungsmittel der Tür der wasserdichten Verbindungsvorrichtung.

14. Verfahren zum Extrahieren der Transfervorrichtung aus dem Gehäuse nach einem der Ansprüche 5 bis 13, das Folgendes umfasst:
a) Anschließen eines Containers an die Verbindungsvorrichtung,
b) Öffnung des Durchgangs zwischen dem Inneren des Gehäuses und dem Inneren des Containers,
c) Trennung der Transfervorrichtung von der Verschiebeeinrichtung,
d) Verformung des ersten Teils der Transfervorrichtung, wodurch ihre Außenabmessungen reduziert werden, sodass sie durch den Durchgang zwischen dem Inneren des Gehäuses und dem Inneren des Containers herausgezogen werden kann,
e) Herausziehen der Transfervorrichtung durch den Übergang zwischen dem Inneren des Gehäuses und dem Inneren des Containers,
f) Verschluss des Übergangs zwischen dem Inneren des Gehäuses und dem Inneren des Containers,
g) Trennen des Containers.

15. Verfahren zum Einsetzen einer Transfervorrichtung des Gehäuses nach einem der Ansprüche 5 bis 13, umfassend:
a') Bereitstellung eines Containers, der eine Transfervorrichtung nach einem der Ansprüche 1 bis 4 enthält,
b') Anschluss des Containers an die Verbindungsvorrichtung,
c') Öffnung des Durchgangs zwischen dem Inneren des Gehäuses und dem Inneren des Containers,
d) Verformung des ersten Teils der Transfervorrichtung zur Verringerung ihrer Außenabmessungen, die das Einführen durch den Durchgang zwischen der Innenseite des Containers und der Innenseite des Gehäuses ermöglicht,
e') Einführen der Transfervorrichtung in den Schrank durch den Übergang zwischen dem Inneren des Schranks und dem Inneren des Containers,
f') Verbindung der Übergabeeinrichtung mit der Verschiebeeinrichtung,
g') Verschluss des Übergangs zwischen dem Inneren des Gehäuses und dem Inneren des Containers,
h') Trennen des Containers.

16. Extraktions- oder Platzierungsverfahren nach Anspruch 14 oder 15, wobei der Container ein Handschuhsystem ist und wobei die Schritte c), d) und e) oder die Schritte d), e') und f') durch den Handschuh des Handschuhsystems durchgeführt werden.

17. Verfahren zum Herausziehen oder Einsetzen nach Anspruch 14 oder 15, wobei der Container ein starrer oder weicher Container ist und wobei die Schritte c), d) und e) oder die Schritte d), e') und f') durch einen Handschuh durchgeführt werden, der in einem Handschuhring in der Nähe der Verbindungsvorrichtung montiert ist.

## Claims

1. Transfer device intended to be mounted in an enclosure provided with at least one sealed connection device, said transfer device comprising at least one first portion (14.1) forming a conduit for the flow of elements into said enclosure, and means for connecting to a device for displacing (DE) said transfer device inside the enclosure, **characterized in that** said first portion (14.1) haselastic deformation properties so as to be able to be elastically deformed by an operator and to allow after deformation the transfer device to pass through the connection device.

2. Transfer device according to claim 1, wherein the first portion (14.1) is made of a material selected from elastomers, for example thermosetting silicone, thermosetting EPDM (ethylene propylene diene monomer), a thermosetting Liquid Silicone Resin (LSR), thermoplastic elastomers, PVC (polyvinylchloride).

3. Transfer device according to claim 1 or 2, wherein the first portion (14.1) has a flared shape of larger diameter intended to be oriented towards the connection device.

4. Transfer device according to claim 1, 2 or 3, wherein the transfer device comprises a second rigid portion (14.2) forming a conduit, to which the connection means are fastened, the second portion (14.2) having for example a tubular shape.

5. Enclosure comprising at least one sealed connection device (D) mounted in a wall of said enclosure, a transfer system (S1) comprising a transfer device (14) according to one of the preceding claims, a device for displacing (DE) the transfer device (14) inside the enclosure to place the transfer device so as to allow components to be transferred through the sealed connection device, and means for mounting/dismounting the transfer device on the displacement device.

6. Enclosure according to claim 5, wherein the first portion (14.1) of the transfer device (14) is oriented so as to penetrate into a flange (6) of the sealed connection device (D) and partially into a flange 9 of the container.

7. Enclosure according to claim 5 or 6, wherein the first portion (14.1) of the transfer device (14) comprises a maximum cross section in the non-deformed state that does not allow it to pass through the first sealed connection device (D).

8. Enclosure according to claim 5, 6 or 7, wherein the means for mounting/dismounting the transfer device (14) are configured to be actuatable with one hand.

9. Enclosure according to one of claims 5 to 8, wherein the displacement device (DE) comprises at least one arm (28) rotatably hinged relative to the sealed connection device so as to allow the transfer device (14) to move closer or move away from the sealed connection device (D).

10. Enclosure according to one of claims 5 to 9, wherein the second portion (14.2) of the transfer device has a cross section allowing it to pass through the sealed connection device without deforming.

11. Enclosure according to one of claims 5 to 10, comprising a glove port allowing the transfer device (14) to be mounted/dismounted by means of a glove mounted in the glove port and to pass it through the sealed connection device.

12. Enclosure according to one of claims 5 to 11, wherein the displacement device (DE) comprises a motorised means.

13. Enclosure according to one of claims 5 to 12, comprising motorised means for locking a door of the sealed connection device and motorised means for opening the door of the sealed connection device.

14. Method for extracting the transfer device from the enclosure according to one of claims 5 to 13 comprising:
a) Connecting a container on the connection device,
b) Opening the passage between the interior of the enclosure and the interior of the container,
c) Disconnecting the transfer device from the displacement device,
d) Deforming the first portion of the transfer device reducing its external dimensions allowing it to be extracted through the passage between the interior of the enclosure and the interior of the container,
e) Extracting the transfer device through the passage between the interior of the enclosure and the interior of the container,
f) Closing the passage between the interior of the enclosure and the interior of the container,
g) Disconnecting the container.

15. Method for installing a transfer device of the enclosure according to one of claims 5 to 13, comprising:
a') Providing a container containing a transfer device according to one of claims 1 to 4,
b') Connecting said container on the connection device,
c') Opening the passage between the interior of the enclosure and the interior of the container,
d') Deforming the first portion of the transfer device reducing its external dimensions allowing it to be inserted through the passage between the interior of the container and the interior of the enclosure,
e') Inserting the transfer device into the enclosure through the passage between the interior of the enclosure and the interior of the container,
f') Connecting the transfer device to the displacement device,
g') Closing the passage between the interior of the enclosure and the interior of the container,
h') Disconnecting the container.

16. Extraction or installation method according to claim 14 or 15, wherein the container is a glove system and wherein steps c), d) and e) or steps d'), e') and f') are performed through the glove of the glove system.

17. Extraction or installation method according to claim 14 or 15, wherein the container is a rigid or flexible container and wherein steps c), d) and e) or steps d'), e') and f') are performed through a glove mounted in a glove port located near the connection device.
